Europäisches Patentamt

(19) European Patent Office

Office européen des brevets

(11) Publication number: **0 094 282**
**A2**

(12) **EUROPEAN PATENT APPLICATION**

(21) Application number: **83400819.5**

(22) Date of filing: **26.04.83**

(51) Int. Cl.³: **B 29 C 29/00**

(30) Priority: **11.05.82 ES 512803**

(43) Date of publication of application: **16.11.83**
**Bulletin 83/46**

(84) Designated Contracting States: **AT BE CH DE FR GB IT
LI LU NL SE**

(71) Applicant: **Guerrero Ferrer, Fernando, Alzinaret 10,
Andorra La Vella (AD)**

(72) Inventor: **Peruga Cases, José, Trav. de las Corts 271,
Barcelona (ES)**

(74) Representative: **Martin, Jean-Jacques et al, Cabinet
REGIMBEAU 26, Avenue Kléber, F-75116 Paris (FR)**

(54) An installation for the recovery of contaminated polyolefin plastics materials.

㊗ An installation for the recovery of contaminated polyolefin plastics, particularly sheet and film, comprising two washing and density selector means. The first said means consists of a first container (3) divided into a plurality of compartments (3', 3'') in mutual communication by labyrinth passages and containing a stirring means, and of a second container (9) with means (10) for moving the floating materials; the containers (3, 9) are in closed circuit communication and are provided with means (4, 13, 14) for removal of rejects. The second washing and density selector means (20) comprises tanks (21, 22) which receive the materials in a deep area and, optionally, a flotation tank (23), there being also means (26, 26') to move the floating material to a collector means (27) for the washed and selected materials. Treatment means for said selected materials complete the installation. In the installation, vigorous stirring for the washing is alternated with gentle movements allowing the rejects to settle out.

AN INSTALLATION FOR THE RECOVERY OF CONTAMINATED POLYOLEFIN PLASTICS MATERIALS.

### FIELD OF THE INVENTION

This invention relates to an installation for the recovery of contaminated polyolefin plastics, particularly, sheet and film, and which provides considerable advantages over the hitherto known recovery equipment.

The installation is of the type preferably having a prior grinding mill for grinding the plastics material to be recovered, connected to a silo means having metering means and the latter is connected, in turn to a feeder means for the ground materials.

The contaminated plastics sheet and film for treatment in a recovery plant, normally come from paper and scrap merchants and, above all, from plastics recoverers in general and are usually delivered in pressed bales. The material generally comprises polyethylene bags which have contained animal feeds, fertilisers, salt and all kinds of chemical and food products. Mixed with such bags or in separate bales, there are bundled dirty sheets of shrink polythene, previously used as pallet covers; the merchants also ship dirty sheet or film used in covering greenhouses and bags of different sizes, used for the packaging of different products and subsequently discarded, and, moreover, plastics containers and dirty plastics from domestic and industrial waste and, in general all kinds of polyolefin and other sheet and film that have been used once and, therefore, contain remains of the packaged or contained products, labels, papers, adhesives and/or strings and always have a certain degree of soil, namely, contamination for the purpose of the cleaning thereof.

## STATE OF THE ART

The hitherto known plants suffer from various drawbacks since, on the one hand they do not satisfactorily solve the washing problem of sheet and film, particularly when they are substantially thin gauge and, on the other hand, they are not able to separate the polyolefins (particularly polyethylenes and polypropylenes) from other plastics, such as the polyvinyl chlorides.

The object of the invention is to overcome the above drawbacks and, therefore, provide an installation whereby only polyolefin plastics are obtained, with the exclusion of other plastics (including sheet polyvinyl chloride) and, furthermore, the plastics materials recovered by the installation are properly free from contaminants, such as to form a uniform mass readily usable in industry.

## SUMMARY OF THE INVENTION

This object is attained by an installation comprising: a first washing and density selector means, consisting of two containers in mutual communication, adapted to contain a washing liquid and having at the bottom thereof respective means for removing to the exterior the heavy reject materials, said first container, which is adapted to receive the ground plastics material continuously, being divided into a plurality of compartments arranged in series and separated from one another by groups of walls forming labyrinth passages for the plastics materials to be recovered, there being arranged in said compartments stirrer means adapted to produce currents in the washing liquid and produce a powerful stirring and rubbing of the materials submerged in said liquid, and the last compartment having a lower communication with said second container, adapted for passage of the plastics materials, there being at the upper end of said second container blades mounted on successive, parallel transverse shafts, said blades being adapted for moving the floating plastics material towards the end of the container opposite to the inlet end thereof, there being at the lower end of the container longitudinal and transverse baffles acting as breakwaters and, in the intermediate portion thereof a further communication with the first container, to make the liquid circuit, as well as a device adapted to collect the floating plastics material and convey it to a hopper connected to a continuous sloping feeder means, adapted to elevate them while permitting them to drain and discharge it on a second washing and density selector means; said second means, also adapted to contain washing liquid being integrated by at least one first tank having a continuous vertical feeder means with an enclosing wall and partly submerged in said tank; by a series of blades similar to those of the first washing and density selector means, disposed at the upper end of the tank; and by a collector means for the plastics materials to be recovered, in communication with a draining, drying and/or compacting means, the bottoms of the two tanks each having respective controllable outlets for the liquid and the contaminants and rejects.

Preferably according to the invention, in the first washing and density selector means, the first container stirrers are constituted by shafts provided with blades forming propellers and by tubes therearound, the tubes being adjustable in position and having adjustable internal fins. The means for evacuating the heavy reject products to the exterior consist of at least one conveyor worm for each container, the conveyor worm of the second container having half the thread righthanded and half lefthanded and a lower receptacle in an intermediate portion thereof, with respective coordinated valves at the inlet and outlet thereof, adapted for collecting the rejects conveyed by each half worm and evacuating them without substantially evacuating liquid from the container; the floating plastics material collecting means disposed in the second container consisting of a continuous bucket elevator having perforated buckets.

In a particularly advantageous embodiment of the invention, the second washing and density selector means, in series with the first tank, comprises one or more tanks, each communicating with the previous one at the upper end thereof and each having a feeder means similar to the feeder means of the first tank, there being also a flotation tank connected to the last tank of the series and in communication therewith, each said tank and flotation tank being provided with a series of blades similar to those of the said first washing and density selector means.

Advantageously, in the second washing and density selector means, the continuous sloping feeder means connected to the first means is provided with at least one adjustable additional liquid entry and, at a lower level, at least one adjustable liquid outlet; each

6

communication between two tanks comprising two opposed tubes positioned on the same horizontal plane and which extend separately from the farther end of one tank relative to the immediately adjacent one and passing round the exterior thereof, debouch in two areas of said immediately adjacent tank, thereby setting up automatic levelling of the liquid in all the tanks and in the flotation tank adjacent the last tank; the controllable lower outlets of the two tanks being associated with a compressed air supply means adapted to prevent blocking and communicating with a draining means, there being at least one adjustable clean liquid inlet in said second washing and density selector means; the collecting means for the plastics material to be recovered disposed in the flotation tank comprising a conveyor means which does not substantially move the liquid.

In a further embodiment, the draining means are adapted to receive the plastics material from the flotation tank by gravity through a tube and comprise a press means, a centrifuge or other appropriate draining means, there being provided means adapted for conveying the drained plastics materials to a storage silo, means adapted to convey the liquid from the draining means to the first container of the first washing and density selector means and at least one conveyor adapted to carry the plastics materials from the silo to the drying means.

In yet a further alternative embodiment of the invention, the drying means consist of at least one rotatable sloping tube provided with internal fins, the lower end of which is in communication with a hot air generating means and the upper end of which, adapted to receive the plastics materials to be dried, is connected to a suction system debouching in a residue cyclone collector, said lower end comprising the passage for the outlet of dried plastics material, there being a conveyor worm adapted to convey said material to a conveyor means, a cyclone tank, compacting means and a final storage silo means for the recovered plastics material.

Further to the advantages already described, the present invention affords the following advantages over the hitherto known facilities:

- higher throughput with greater industrial yield;
- less labour per unit weight of product obtained;
- cleaner, better quality product, which may be reused for producing film;
- energy savings;
- very thin gauge film may be processed;
- less cost per unit weight of end product;

BRIEF DESCRIPTION OF THE DRAWINGS

To facilitate an understanding of the foregoing, while disclosing at the same time details of interest, reference is made hereinafter to the accompanying drawings given by way of an illustrative, non-limitative example. In the drawings:

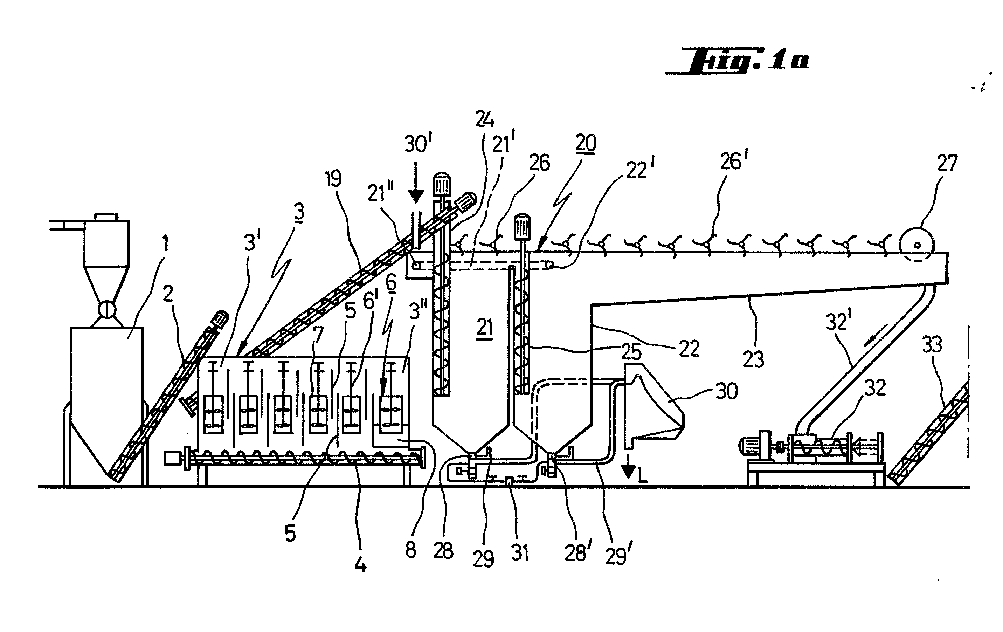

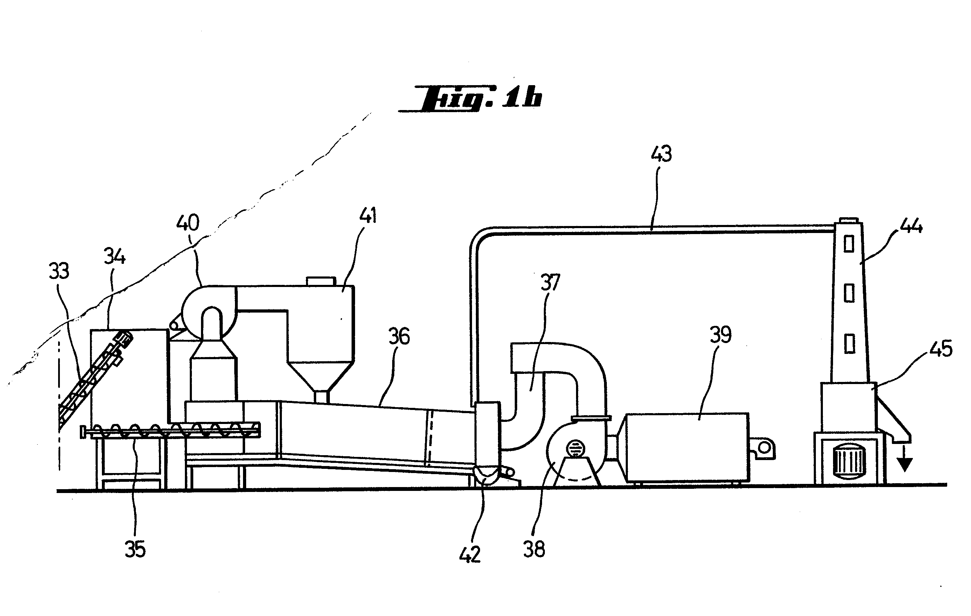

Figure 1a is a schematic elevation view of the installation from the reception silo means up to the draining means;

Figure 1b is a similar view of the installation from the conveyor worm receiving the plastics materials from the draining means up to the compacter means;

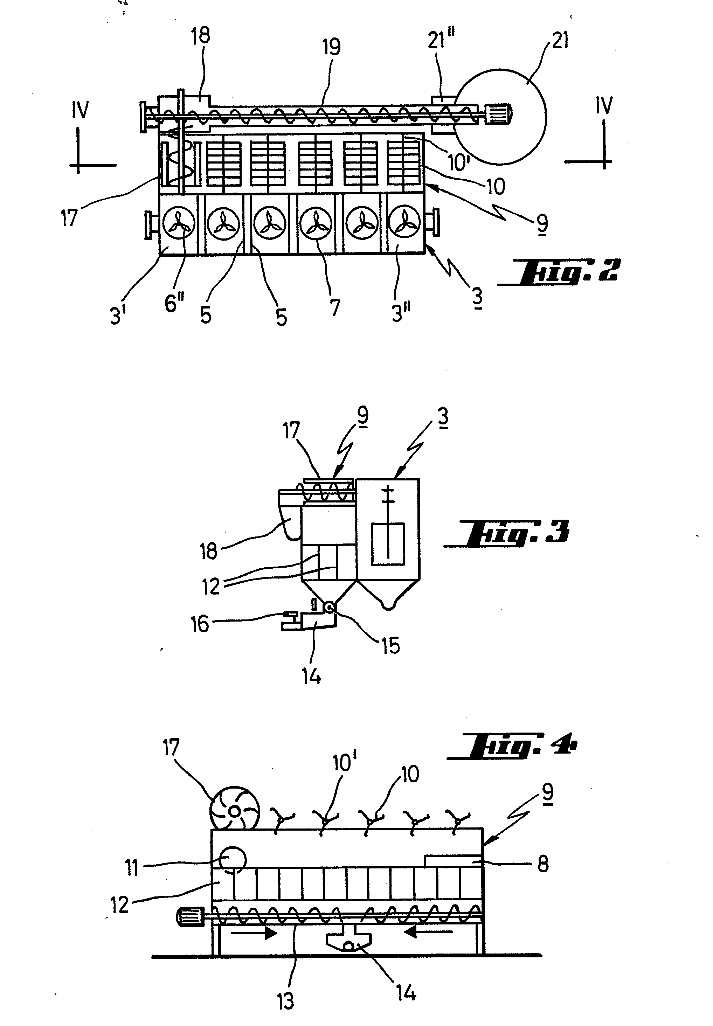

Figure 2 is a schematic plan view of the first washing and density selector means;

Figure 3 is a schematic section view of the means of Figure 2; and

Figure 4 is a cross section view on the line IV-IV of Figure 2.

## DETAILED DESCRIPTION OF THE PREFERRED EMBODIMENT

A grinding means (not shown) for the prior grinding of the plastics materials to be recovered communicates over an appropriate conveyor means (e.g. air conveyor) for the already ground contaminated plastics materials, with a reception silo means 1 having a meterii

9

means and a vibrator means and lower tapered outlet,
discharging said materials on a feeder means such as a
conveyor worm 2.

The ground plastics materials are continuously
discharged by said conveyor worm 2 in the initial
compartment 3' in the direction of flow of the product
in process, of the first container 3 of a first washing
and density selector means, comprising said container
and a second container 9, both containers being in mutual
communication at the lower portion 8 and intermediate
portion 11 thereof and being provided at the bottom
thereof with means 4 and 13, 14 for evacuating the heavy
contaminants and other rejects to the exterior.

The first container 3 is divided into a plurality
of compartments 3', six in the illustrated embodiment,
arranged in series (relative to the path of the material
in processing) and separated from one another by at least
one pair of walls or partitions 5 which are partially
opposed as being at different heights and provide
labyrinth passages, allowing the circulation therethrough
of the plastics material in processing. In each compartment
3' there is a preferably vertically disposed stirring
means 6, appropriately driven (e.g. by transmissions and
one or more electric motors, optionally equipped with
speed variators) which produces currents in the washing

0094282

liquid. Said stirring means comprise a shaft 6' and a plurality of blades forming superimposed, spaced apart propeller means 6'' and tubes 7 around the propeller means and being adjustable in height and, as required, horizontally, said tubes being provided with internal sloping fins (not shown), for example three in each tube.

The rotation of the propeller means 6'' causes in each compartment 3' a powerful current of liquid (which may be water), swirling it and driving it through the tube 7, at the same time as the materials therein are forced along. The impacting of the plastics materials against the propeller means, the interior wall of the tube and the fins thereof causes a powerful stirring and rubbing action on the materials submerged in the liquid, the heavy contaminants which do not float, such as stones, earth and other particles being dislodged therefrom and deposited in the bottom of the container 3, from where they are removed by a conveyor worm 4.

The endmost compartment 3'' is provided with a passage 8 communicating at the lower end thereof with the second container 9, the plastics materials being processe passing therethrough substantially washed after having given up a major portion of the heavy extraneous material they contained. Since such plastics material is of lower density than the water, it rises to the surface of the liquid in the container 9 and floats thereon. The density selection is initiated, comprising of making the said plastics material advance very slowly, driven by groups of blades 10, mounted on successive parallel transverse shafts 10' which are driven by at least one motor and a speed variator, provided with the corresponding transmissions. Thus the floating plastics materials are moved towards the end of the container 9 opposite to the entry end thereof and on arriving at said opposite end, such materials have lost, during the slow movement thereof, the major portion of the heaviest extraneous bodies they were entraining and/or had incorporated therein, as well as, at least in part, the plastics materials other than the polyolefins.

To achieve the minimum disturbance of the liquid, namely the maximum tranquillity required for obtaining a good density selection of the materials being processed, the second container 9 is provided, in the lower portion thereof (up to a height which does not hinder the movement of the plastics materials), with crossed longitudinal and transverse baffles 12, forming a sort of grid square with lower passages, forming a breakwater. In a portion above the baffles, there is a communication 11' between both containers 9 and 3, to make the liquid circuit and ensure continuity thereof by allowing the return flow of the liquid to the first container 3.

Below the baffles 12, in the bottom of the container 9, there is a conveyor worm extending along the whole length thereof and having one half provided with a righthand thread and the other half provided with a lefthand thread, i.e., both half worms conduct the rejected extraneous bodies, now sedimented out and to be removed from the process towards a receptacle 14 located in an intermediate position below said conveyor worm, this latter being driven by a motor means and, optionally, through a speed variator. The receptacle 14 is provided with two solenoid valve means 15 and 16, the former at the inlet thereto and the latter at the outlet therefrom, said valve means being so coordinated that while the former is open to allow evacuation of the rejects entrained by the conveyor worm 13, as described hereinbefore, the second solenoid valve means 16 remains closed, and vice versa. In this way the rejects are evacuated to the exterior, without any substantial loss of the liquid in the container 9. Timers adjusted in dependence of the amount of rejects to be removed from the receptacle may be used to control the opening and closing times of the solenoid valve means 15 and 16.

At the end of the path of the floating plastics materials in the container 9 there is a transversely disposed endless bucket chain 17 with perforated bucket means, which collects the said materials and conveys them to a hopper 18, said materials being drained during this conveyance. The hopper 18 communicates with a sloping continuously operating feeder means, acting as hoist, such as a conveyor worm 19, such that the plastics materials are elevated from the hopper 18 to discharge above the upper portion of a second washing and density selector means 20, precisely at the upper end of a further continuous, vertical and downwardly directed feeder means 24. During the sloping run, the plastics materials continue to drain, the sloping feeder means 19 having at least one adjustable inlet for additional liquid (for cleaning purposes) and, at a lower level, at least one adjustable liquid outlet, said inlet and outlet not being shown in the drawing.

The endless bucket wheel 17 may be replaced by any other appropriate means for collecting and conveying the plastics materials to the sloping continuous elevator-
-feeder means.

The second washing and density selector means 20 comprises a first tank 21, preferably of substantially cylindrical form, with an inverted taper bottom portion, with the continuous vertical downward feeder means 24 abutting the wall thereof, the feeder means being in this case a conveyor worm, having an enclosed wall and being partly submerged in said tank, a second tank 22 in communication with said first tank at the top end thereof and being of a similar configuration, with a further feeder means 25 identical to the feeder means 24 in an equivalent position, both tanks being communicated by two tubes 21' (there being shown in the Figure in phantom the one located behind the tanks from the viewer's point of view), opposite one another and positioned in the same plane, extending separately from the end 21'' of the tank 21 remote from tank 22 and encompassing the tank 21, they debouch in two areas 22' of tank 22, thereby providing for automatic levelling of the liquid in both tanks and in a flotation tank 23. The second means 20 also comprises the said flotation tank 23, connected to the tank 22 and in communication therewith to form, for example, a body extending therefrom as a prolongation of the tank 22, a series of blades 26 and 26', disposed over the surface of the liquid in the tanks 21 and 22 and flotation tank 23, and a collecting means 27 for the treated floating plastics means, such as for example a bucket wheel which does not substantially disturb the liquid and provided with perforated buckets and an appropriate drive means (not shown) having a relatively slow speed (a worm could be used instead of the bucket wheel), said collecting means being positioned transversely in the end of the flotation tank remote from the tank 22, and which discharges the said plastics materials in a draining, drying and/or compacting means, as required.

The tanks 21 and 22 are provided in the bottoms thereof with respective controlled outlets 28 and 28' for the liquid and sediments collected therein during the process. To obtain a top quality end product, it is absolutely necessary that the waters or liquids in general should be as clean as possible and for this purpose they should be continuously renewed, a convenient amount being drawn off from the lower portion of the tank bottoms with the accumulated sludge, over lines 29 and 29' to a draining means 30 which may be a wire cloth, perforated plate, grid (mechanically moved if desired), etc., on a sloping plane, where the liquid is separated from the extraneous bodies, plastics other than the polyolefins and said sludge, which may be removed from the draining means 30 and the filtered liquid is discharged through L. This flow of discharged liquid is compensated with an equivalent flow of clean liquid fed in, for example, through the inlet 30' adjacent the first tank 21, other liquid inlets being possible as required. The discharged liquid may be removed to a tip or may be purified for recirculation in the installation. To prevent possible obstruction by foreign bodies, in the passage of the soiled liquid through the pipes 29 and 19' there is in each outlet 28 and 28' respective compressed air means 31 which may be periodically operated (by hand or automatically) to clean the pipes and avoid obstruction thereof.

The plastics materials discharged by the conveyor worm 19 in the conveyor worm 24 of the tank 21 are lowered by the latter towards the lower portion of the said tank until they are freely discharged slowly, without scarcely moving the liquid, into the tank 21 and thereafter, in view of their lower density, they rise slowly to the free surface, from where they are conveyed by the blades 26 to be collected by the conveyor worm 25 of tank 22, in which the same operations are repeated, the plastics material being processed descending to the lower portion of the conveyor worm 25 to be discharged in the lower  portion of the tank 22 and rising therefrom to the free surface of the liquid, from where they are driven slowly by the blades 26' across the flotation tank 23.

While being moved along by the conveyor worms 24 and 25 and tanks 21 and 22 and also by the blades 26 and 26', the plastics materials release the foreign bodies denser than the liquid that they may still entrain or have adhered thereto (including the plastics other than the polyolefins) which bodies descend to the bottom of the tanks 21 and 22 and which are removed through the outlets

0094282

28 and 28' as described hereinbefore. The plastics materials become increasingly cleaner as they pass through the tanks 21 and 22 and the blades 26' drive them across the surface of the flotation tank 23 while scarcely moving the liquid so that the remains and other minute particles become separated from the plastics material and are gradually deposited on the inclined bottom of the flotation tank.

When the plastics materials reach the end of their run through the flotation tank 23, they are collected by the perforated buckets (to drain the liquid) of the endless bucket wheel 27. All the movements of this part of the installation are slow, to facilitate the density selection operation in the flotation bath and the slowness, together with the movement of the liquid, make it possible for the last particles to become deposited on the bottom of the flotation tank.

The clean and selected plastics materials are deposited by the endless bucket chain 27 in a funnel connected over a pipe 32' along which they slide by gravity to a draining means which, in this embodiment, is a press 32 (the draining means could be a centrifuge or any other appropriate draining means), the separated liquid being returned by means, not shown, to the container 3 which contains a weir to maintain a constant

0094282

liquid level required for the first wash and this supply of liquid from the press 32 maintains the liquid of the first washing and density selector means, which is relatively the dirtiest in the installation, cleaner. The liquid expressed by the press 32 could be recirculated at the inlet 30'. After draining, the plastics materials are conveyed by a conveyor worm 33 to a storage silo means 34, from where they are conveyed to a drying means by means of a conveyor 35 which feeds them to the drying means, embodied in this case by two sloping parallel rotating tubes 36 (only the one nearest the viewer is shown in the figure), provided with internal fins. Hot air is blown into the lower or exist end of the tubes 36 by respective tubes 37, driven by a fan 38 and produced by a hot air generator means 39. The single fan discharge end is divided into two tubes 37. The upper or inlet end of the tubes 36 is connected to a suction system 40 to remove the moisture from the hot plastics material and the remains or residues of the ground products are deposited in a cyclone collector 41.

The clean, selected and dry plastics materials are collected at the exit end of the tubes 36 by a conveyor worm 42 which conveys them to a further fan or conveyor means and from here through a tube 43 to a cyclone deposit, said recovered plastics materials then being fed to a final storage silo means or a compacting or agglomerating means 45, as required.

What We claim is:

## CLAIMS

1.　　An installation for the recovery of contaminated polyolefin plastics materials, particularly sheet and film, provided with means for prior grinding of the plastics materials to be recovered, and comprising a first washing and density selector means, consisting of two containers (3, 9) in mutual communication, adapted to contain a washing liquid and having at the bottom thereof respective means (4, 13, 14) for removing to the exterior the heavy reject materials, said first container (3), which is adapted to receive the ground plastics material continuously, being divided into a plurality of compartments (3', 3'') arranged in series and separated from one another by groups of walls (5) forming labyrinth passages for the plastics materials to be recovered, there being arranged in said compartments (3', 3'') stirrer means (6) adapted to produce currents in the washing liquid and produce a powerful stirring and rubbing of the materials submerged in said liquid, and the last compartment (3'') having a lower communication (8) with said second container (9), adapted for passage of the plastics materials, there being at the upper end of said second container (9) blades (10) mounted on successive, parallel transverse shafts (10'), said blades being adapted for moving the floating plastics material towards the end of the container (9) opposite to the inlet end thereof, there being at the lower end of the container (9) longitudinal and transverse baffles (12) acting as breakwaters and, in the intermediate portion thereof a further communication (11) with the first container (3), to make the liquid circuit, as well as a device (17) adapted to collect the floating plastics material and convey it to a hopper (18) connected to a continuous sloping feeder means (19), adapted to elevate it while permitting it to drain and discharge it on a second washing and density selector means (20); said second means, also adapted to contain washing liquid being integrated by at least one first tank (21) having a continuous vertical feeder means (24) with an enclosing wall and partly submerged in said tank; by a series of blades (26) similar to those of the first washing and density selector means, disposed at the upper end of the tank; and by a collector means (27) for the plastics materials to be recovered, in communication with a draining, drying and/or compacting means (32, 36, 45) the bottoms of the two tanks (21, 22) each having respective controllable outlets (28, 28') for the liquid and the contaminants and rejects.

2. The installation of claim 1, wherein in the first washing and density selector means, the stirring means (6) of the first container (3) are constituted by shafts (6') provided with blades forming propellers (6'') and by tubes (7) therearound, the tubes being adjustable in position and having adjustable internal fins; wherein the means for evacuating the heavy reject products to the exterior consist of at least one conveyor worm (4, 13) for each container (3, 9), the conveyor worm (13) of the second container (9) having half the thread righthanded and half lefthanded and a lower receptacle (14) in an intermediate portion thereof, with respective coordinated valve means (15, 16) at the inlet and outlet thereof, adapted for collecting the rejects conveyed by each half worm and evacuating them without substantially evacuating liquid from the container; and wherein the floating plastics material collector means, disposed in the second container (9) consists of a continuous bucket elevator means (17) having perforated buckets.

3. The installation of claim 1, wherein the second washing and density selector means (20), in series with the first tank (21), comprises one or more tanks (22), each communicating with the previous one at the upper end thereof and each having a feeder means (25) similar to the feeder means (24) of the first tank (21), there being also a flotation tank (23) connected to the last tank of the series and in communication therewith, each said tank and flotation tank being provided with a series of blades (26, 26') similar to those of the said first washing and density selector means.

4. The installation of claim 1 or 3, wherein in the second washing and density selector means (20), the continuous sloping feeder means (19) connected to the first means is provided with at least one adjustable additional liquid entry and, at a lower height, at least one adjustable liquid outlet; each communication between two tanks comprising two opposed tubes (21') positioned on the same horizontal plane and which extend separately from the farther end of one tank (21) relative to the immediately adjacent one (22) and, passing round the exterior thereof, debouch in two areas of said immediately adjacent tank, thereby setting up automatic levelling of the liquid in all the tanks (21, 22) and in the flotation tank (23) adjacent the last tank; the controllable lower outlets (28, 28') of the two tanks being associated with a compressed air supply means (31) adapted to prevent blocking and communicating with a draining means (30), there being at least one adjustable clean liquid inlet in said second washing and density selector means (20); the collecting means (27) for the plastics material to be recovered disposed in the flotation tank (23) comprising a conveyor means which does not substantially move the liquid.

5.    The installation of claim 1, wherein the draining means (32) are adapted to receive the plastics material from the flotation tank (23) by gravity through a tube (32') and comprise a press means, a centrifuge or other appropriate draining means, there being provided means (33) adapted for conveying the drained plastics materials to a storage silo means (34), means adapted to convey the liquid from the draining means to the first container (3) of the first washing and density selector means and at least one conveyor means (35) adapted to carry the plastics materials from the silo means (34) to the drying means (36).

6.    The installation of claim 1, wherein the drying means consist of at least one rotatable sloping tube (36) provided with internal fins, the lower end of which is in communication with a hot air generating means (39) and the upper end of which, adapted to receive the plastics materials to be dried, is connected to a suction system (40) debouching in a residue cyclone collector (41), said lower end comprising the passage for the outlet of the dried plastics material, there being a conveyor worm (42) adapted to convey said material to a conveyor means, a cyclone tank (44), compacting means (45) and a final storage silo means for the recovered plastics material.

Fig. 1a

Fig. 1b

Fig. 2

Fig. 3

Fig. 4